# EUROPÄISCHE PATENTSCHRIFT

(11) **EP 0 919 498 B1**
(45) Veröffentlichungstag und Bekanntmachung des Hinweises auf die Patenterteilung: **09.10.2002**
(21) Anmeldenummer: 99101195.8
(22) Anmeldetag: 10.07.1996
(51) Int. Cl.: B65H 23/188, G05B 13/02, B65H 77/00, B41F 13/00

(54) **Verfahren zur Regelung einer Bahnspannung**
Method for controlling a web tension
Méthode pour contrôler une tension de bande

(30) Priorität: 11.07.1995 DE 19525170
(43) Veröffentlichungstag der Anmeldung: 02.06.1999
(62) Teilanmeldung aus: 96923823.7
(73) Patentinhaber: Koenig & Bauer Aktiengesellschaft, 97080 Würzburg (DE)
(72) Erfinder: Glöckner, Erhard Herbert, Dr., 97246 Eibelstadt (DE); Seyfried, Rüdiger Karl, 97299 Zell/Main (DE)

(56) Entgegenhaltungen:
- WO-A-86/01155
- DE-A- 2 122 416
- DE-A- 3 537 014
- PATENT ABSTRACTS OF JAPAN vol. 14, no. 206 (M-0967), 26. April 1990 -& JP 02 043159 A (MITSUBISHI HEAVY IND LTD), 13. Februar 1990
- PATENT ABSTRACTS OF JAPAN vol. 18, no. 160 (M-1578), 17. März 1995 -& JP 05 330710 A (TOKYO KIKAI SEISAKUSHO LTD), 14. Dezember 1993
- PATENT ABSTRACTS OF JAPAN vol. 17, no. 469 (M-1469), 26. August 1993 -& JP 05 111998 A (TOKYO KIKAI SAISAKUSHO LTD), 7. Mai 1993

## Beschreibung

Die Erfindung betrifft ein Verfahren zur Regelung einer Bahnspannung von Bahnen in einer Rollenrotationsdruckmaschine gemäß dem Oberbegriff des Anspruchs 1.

Die Regelung einer Bahnspannung von Bahnen in einer Rollenrotationsdruckmaschine ist ein komplexer Vorgang. An diesem Vorgang sind eine Vielzahl von Variablen, insbesondere von nicht exakt quantifizierbaren Variablen, beteiligt, die unter gegenseitiger Beachtung miteinander verknüpft werden. Diese Verknüpfung obliegt der Aufgabe eines Bedieners und ist von dessen Erfahrungen abhängig.
Nachteilig ist, daß somit die erreichbare Qualität der Regelung der Bahnspannung von den subjektiven Beurteilungen und Erfahrungen des Bedieners abhängig ist und nur schwer zu reproduzieren ist.

Die WO-A-86/01155 offenbart ein Verfahren zur Regelung der Bahnspannung von Bahnen in einer Rollenrotationsdruckmaschine. Dabei wird ein Wert der Bahnspannung von jeder beteiligten Bahn als Eingangsgröße für die Regelung erfaßt.

Die JP-A-2 043 159 beschreibt eine Trichtereinlaufwalze mit mehreren Bahnen. Die Bahnspannung dieser Bahnen wird so festgelegt, daß die Bahnspannung der untersten Bahn am höchsten ist.

Der Erfindung liegt die Aufgabe zugrunde, ein Verfahren zur Regelung einer Bahnspannung von Bahnen in einer Rollenrotationsdruckmaschine zu schaffen.

Diese Aufgabe wird erfindungsgemäß durch die Merkmale des kennzeichnenden Teiles des Anspruchs 1 gelöst.

Die Fuzzy-Regelung betreffenden Teile der Beschreibung fallen nicht unter den Schutzbereich.

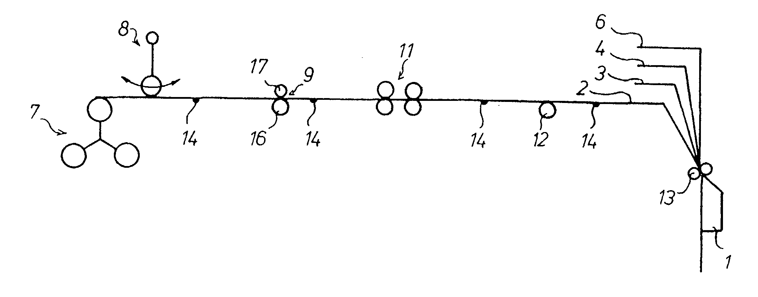

Die mit der Erfindung erzielbaren Vorteile bestehen insbesondere darin, daß die Bedienung von Rollenrotationsdruckmaschinen vereinfacht wird und keine hochqualifizierten, erfahrenen Bediener notwendig sind. Durch die weitgehend vom Menschen unabhängige Steuerung wird die Gefahr von Bahnrissen minimiert und die Bahnspannung optimiert, was zu höherer Druckqualität und Produktivität führt. Neben exakten Einstellwerten, z. B. minimale und maximale Bahnspannung, können auch vage, z. B. materialbezogene Aussagen, beispielsweise über Papierqualität, Gummituchüberstand, Feuchtwasserführung verarbeitet werden, wodurch das Regelverhalten der Rollenrotationsdruckmaschine genauer modelliert werden kann. Dann ist es möglich Sensoren mit geringerer Auflösung oder mit diskreten Ausgangsbereichen zu verwenden. Mit dem erfindungsgemäßen Verfahren können große Datenmengen in kurzer Zeit verarbeitet werden. Eine schematische Bahnführung einer Rollenrotationsdruckmaschine ist in der Zeichnung dargestellt und das dazugehörige, erfindungsgemäße Verfahren wird im folgenden näher beschrieben.

Einem Falzapparat 1 einer Rollenrotationsdruckmaschine werden eine Anzahl, im vorliegenden Beispiel vier, Bahnen 2, 3, 4, 6, z. B. Papier- oder Folienbahnen, zugeführt. Hierbei sind beispielsweise entlang jeder Bahnführung ein Rollenstern 7, eine Pendelwalze 8, ein Einzugswerk 9, eine Druckeinheit 11 und eine der Druckeinheit 11 nachgeschaltete Zugwalze 12 angeordnet, bevor die jeweiligen Bahnen 2, 3, 4, 6 auf einer Trichtereinlaufwalze 13 zusammengeführt werden. Zwischen Pendelwalze 8 und Einzugswerk 9, Einzugswerk 9 und Druckeinheit 11, Druckeinheit 11 und Zugwalze 12 sowie Zugwalze 12 und Trichtereinlaufwalze 13 ist jeweils ein Bahnspannungsmeßsensor 14 angeordnet. Dargestellt und beschrieben ist exemplarisch nur eine Bahn 2, wobei die Ausführungen ebenso für die anderen Bahnführungen gelten.
Mittels der Pendelwalze 8 wird eine Abrollgeschwindigkeit der Bahn 2 von der Rolle, d.h. die Bahnspannung zwischen Rollenstern 7 und Einzugswerk 9 geregelt. Hierzu ist die Pendelwalze 8 schwenkbar gelagert und wird mit einer Kraft, z. B. mittels eines Pneumatikzylinders, die einem vorgegebenen Sollwert der Bahnspannung entspricht, beaufschlagt. Die Lage der Pendelwalze 8 wird über einen Sensor laufend und gleichzeitig oder periodisch ausgewertet. Diese Lage der Pendelwalze 8 stellt ein Maß für den Istwert der Bahnspannung zwischen Rollenstern 7 und Einzugswerk 9 dar. Aufgrund eines Vergleiches des gemessenen Istwertes mit dem vorgegebenen Sollwert der Bahnspannung wird die Abrollgeschwindigkeit der Bahn vom Rollenstern 7 geändert. Bei der Vorgabe des Sollwertes für die Bahnspannung wird die Breite der Bahn 2 berücksichtigt. Das Einzugswerk 9 ist als Zugwalzenpaar ausgebildet, wobei eine Umfangsgeschwindigkeit einer Zugwalze 16 mittels eines Feinsteinstellgetriebes oder eines elektrischen Antriebes veränderbar ist und eine Andrückwalze 17 mit einer Kraft beaufschlagt wird, um die Bahn 2 zwischen Andrückwalze 17 und Zugwalze 16 zu klemmen. Dadurch soll ein nahezu schlupffreier Transport der Bahn 2 gewährleistet werden. Die Regelung der Bahnspannung erfolgt über eine Veränderung der Drehzahl der Zugwalze 16, weswegen diese unabhängig von der Breite der Bahn 2 ist.
Die Zugwalze 12 ist adäquat dem Einzugswerk 9 aufgebaut. Somit kann die Umfangsgeschwindigkeit der Zugwalze 12 relativ zur Druckeinheit 11 verändert werden. Wird die Umfangsgeschwindigkeit der Zugwalze 12 erhöht, vergrößert sich die Bahnspannung vor der Zugwalze 12 und verkleinert sich nach der Zugwalze 12. Bei Verringerung der Umfangsgeschwindigkeit der Zugwalze verkleinert sich die Bahnspannung vor der Zugwalze 12 und vergrößert sich nach der Zugwalze 12.
Die Veränderung der Bahnspannung vor der Trichtereinlaufwalze 13 erfolgt wie bei der Zugwalze 12 durch Veränderung der Drehzahl der Trichtereinlaufwalze 13.

Die Regelung der Bahnspannung erfolgt folgendermaßen: Als Eingangsgrößen für die Regelung werden die von den Bahnspannungsmeßsensoren ermittelten Istwerte herangezogen. Zudem werden als weitere Eingangsgrößen weitere den Maschinenzustand beschreibende Eigenschaften wie Maschinengeschwindigkeit, Maschinenbeschleunigung, Produktionswege (Anzahl der Bahnen), und Rollenwechsel sowie verfahrensbedingte Eigenschaften wie Farbmenge, Farbart, Sujet und Feuchtmittelmenge mittels Detektoren an die Regelung weitergegeben. Wichtig ist, daß zusätzlich über eine Eingabestation bahnspezifische Parameter wie Spannungs/Dehnungskennlinien für verschiedene Feuchtigkeitsgehalte, Penetrationsverhalten und Reißfestigkeit der Bahn 2 vorgegeben werden können. Diese Parameter liegen oft nicht als konkrete Zahlenwerte vor, so daß ein Bediener nur "unscharfe" Aussagen wie beispielsweise "festes Papier mit geringer Feuchtigkeitsaufnahme" machen kann. Alle bzw. ein Teil dieser Eingangsgrößen werden durch linguistische Regeln qualitativ charakterisiert und durch Zugehörigkeitsfunktionen beschrieben. Aus diesen Zugehörigkeitsfunktionen werden dann Wahrheitswerte gebildet.
Zur Verarbeitung dieser Wahrheitswerte werden linguistische Regeln ("Fuzzy-Regel") gebildet und miteinander verknüpft. Damit wird die das Reglerverhalten bestimmende Strategie festgelegt. Im vorliegenden Beispiel wird das Regelverhalten wesentlich durch folgende Regelstrategie bestimmt:
Nach Ermitteln aller Wahrheitswerte insbesondere durch die Bahnspannungsmeßsensoren werden Wahrheitswerte der Spannungen der Bahnen 2, 3, 4, 6 miteinander verglichen. Als immer zu erfüllende Regel ("Min/Max-Regel") für die Bahnspannung gilt, daß die Bahnspannung nicht zu gering sein darf (z. B. Bahnspannung nicht kleiner als 8 daN/m), aber auch nicht zu hoch sein darf (z. B. Bahnspannung nicht größer als 50 daN/m). Ist die Bahnspannung zu gering, ist die Gefahr des Verlaufens der Bahn 2 groß und bei zu großer Bahnspannung ist die Gefahr eines Risses der Bahn 2 groß. Nach überprüfen und eventuellen Nachregeln der Spannung der Bahn 2 nach der "Min/Max-Regel" erfolgt eine überprüfung der Bahnspannungen der jeweiligen Bahn 2, 3, 4, 6 an der Trichtereinlaufwalze. Hier gilt die Regel, daß die unterste Bahn 2 die höchste Bahnspannung und die oberste Bahn 6 die niedrigste Bahnspannung aufweisen soll. Zusätzlich sollen die Bahnspannungen der jeweiligen Bahnen 2, 3, 4, 6 von innen nach außen möglichst gleichmäßig abgestuft eingestellt werden.
Zur Erfüllung dieser Regeln wird zuerst eine Veränderung der Spannung der Bahn 2 mit dem Einzugswerk 9 vorgenommen. Eine Veränderung der Spannung mit dem Einzugswerk 9 bewirkt eine Veränderung der Spannung bis zum Falzapparat 1. Dabei ist die Regel zu beachten, daß die Spannung der Bahn 2 vor der Druckeinheit 11 einen mittleren Wertebereich (z. B. ca. 20 bis 22 daN/m) nicht unterschreiten sollte. Ist die Regelung der Spannung der Bahn 2 unter der Berücksichtigung der "Min/Max-Regel" entlang der gesamten Bahnführung nicht ausreichend, wird mit der Zugwalze 12 verstellt. Mittels solcher Fuzzy-Regeln sind Nachbildungen von menschlichen Handlungschemen, die von unscharfen Aussagen geprägt sind, möglich.

Zur Generierung der diskreten Stellgrößen zur Beeinflussung der Bahnspannung mittels beispielsweise Rollenstern 7, Einzugswerk 9, Zugwalze 12 und Trichtereinlaufwalze 13 werden die aufgrund der Fuzzy-Regeln gebildeten Zugehörigkeitsfunktionen auf konkrete Zahlenwerte rückgebildet. Diese "Defuzzifizierung" erfolgt beispielsweise mittels einer Schwerpunktmethode.

Dieser Fuzzy-Regelung können auch Presetdaten aus vorangegangenen Produktionen oder die manuell vorgegeben werden als Startwerte dienen.
Zudem kann der Fuzzy-Regler mit den Lernprinzipien Neuronaler Netzwerke kombiniert werden. Dadurch können die Fuzzy-Regler ihre Fuzzy-Regeln und Zugehörigkeitsfunktionen aus den Eingangsgrößen lernen.

Die erfindungsgemäße Regelung kann die gesamte Rollenrotationsdruckmaschine umfassen oder auch nur Teilbereiche automatisch regeln. In allen Fällen ist aber eine Umschaltung auf völlige manuelle Steuerung möglich. Dabei werden die mit Fuzzy-Regeln beschriebenen Verfahrensschritte manuell oder mittels einer konventionellen Steuerung ausgeführt.

### Teileliste

- 1: Falzapparat
- 2: Bahn
- 3: Bahn
- 4: Bahn
- 5: -
- 6: Bahn
- 7: Rollenstern
- 8: Pendelwalze
- 9: Einzugswerk
- 10: -
- 11: Druckeinheit
- 12: Zugwalze
- 13: Trichtereinlaufwalze
- 14: Bahnspannungsmeßsensor
- 15: -
- 16: Zugwalze (9)
- 17: Andrückwalze (9)

## Patentansprüche

1. Verfahren zur Regelung einer Bahnspannung von Bahnen (2; 3; 4; 6) in einer Rollenrotationsdruckmaschine, wobei die jeweilige Bahnspannung aller auf einer Trichtereinlaufwalze (13) liegenden Bahnen (2; 3; 4; 6) so festgelegt wird, daß die Bahnspannung der untersten Bahn (2) am höchsten ist, **dadurch gekennzeichnet, daß** die Bahnspannung der obersten Bahn (6) am niedrigsten ist und daß die Regelung der Bahnspannung jeder Bahn (2; 3; 4; 6) zuerst mittels je eines Einzugswerkes (9) vorgenommen wird, und daß die Regelung der Bahnspannung zusätzlich mittels einer Zugwalze (12) nach der Druckeinheit (11) erfolgt, wenn die Regelung mit dem entsprechenden Einzugswerk (9) vor der Druckeinheit (11) vorgegebene Grenzbereiche überschreitet.

## Claims

1. Method of regulating a web tension of webs (2; 3; 4; 6) in a web-fed rotary printing machine, the respective web tension of all the webs (2; 3; 4; 6) located on a former inlet roll (13) being defined in such a way that the web tension of the lowest web (2) is the highest, **characterized in that** the web tension of the uppermost web (6) is the lowest, and **in that** the web tension of each web (2; 3; 4; 6) is initially regulated by means of a pulling mechanism (9) in each case, and **in that** the web tension is additionally regulated by means of a pull roll (12) downstream of the printing unit (11) when the regulation with the corresponding pulling mechanism (9) upstream of the printing unit (11) exceeds predefined limiting ranges.

## Revendications

1. Procédé de régulation d'une tension de bande pour des bandes (2; 3; 4; 6) dans une machine à imprimer rotative à rouleaux, la tension de bande respective de toutes les bandes (2; 3; 4; 6) placée sur un rouleau d'introduction en cône (13) étant fixée de manière que la tension de la bande (2), située en position la plus basse, soit celle qui soit maximale, **caractérisé en ce que** la tension de bande de la bande (6), située en position la plus haute, est celle qui est la plus faible, et **en ce que** la régulation de la tension de bande de chaque bande (2; 3; 4; 6) soit d'abord effectuée respectivement à l'aide d'un dispositif d'introduction (9), et **en ce que** la régulation de la tension de bande s'effectue en plus à l'aide d'un rouleau de traction (12), installé après l'unité d'impression (11), lorsque la régulation, effectuée avec le dispositif d'introduction (9) correspondant, dépasse des valeurs limites prédéterminées en amont de l'unité d'impression (11).
